Europäisches Patentamt

European Patent Office

Office européen des brevets

(11) Veröffentlichungsnummer: **0 413 268 A2**

# EUROPÄISCHE PATENTANMELDUNG

(21) Anmeldenummer: 90115369.2

(22) Anmeldetag: **10.08.90**

(51) Int. Cl.⁵: **G02B 5/08**

(30) Priorität: **16.08.89 DE 3926880**

(43) Veröffentlichungstag der Anmeldung:
**20.02.91 Patentblatt 91/08**

(84) Benannte Vertragsstaaten:
**CH DE FR GB IT LI NL**

(71) Anmelder: **Firma Carl Zeiss**

**D-7920 Heidenheim (Brenz)(DE)**
(84) **CH**

Anmelder: **CARL-ZEISS-STIFTUNG trading as CARL ZEISS**

**D-7920 Heidenheim (Brenz)(DE)**
(84) **GB**

(72) Erfinder: **Bulla, Horst**
**Wilh. Hauff-Strasse 4**
**D-7923 Königsbronn(DE)**
Erfinder: **Dudziak, Ulf**
**Handelstrasse 15**
**D-7803 Heuweiler(DE)**
Erfinder: **Neumann, Walter, Dr.**
**Schlehenweg 20**
**D-7923 Königsbronn(DE)**

(54) **Träger für einen Leichtbauspiegel.**

(57) Für scannende und für stabilisierende spiegeloptische Systeme wird ein Trägermaterial für bewegliche Spiegel angegeben, das als Verbundmaterial aus Glaskohlenstoff und faserverstärktem Kunststoff aufgebaut ist, und das sich durch gute optische Bearbeitbarkeit, durch geringes spezifisches Gewicht und durch einen genügend großen Elastizitätsmodul auszeichnet.

EP 0 413 268 A2

## TRÄGER FÜR EINEN LEICHTBAUSPIEGEL

Die Erfindung betrifft einen Träger für einen Leichtbauspiegel zum Einsatz in scannenden und in stabilisierenden spiegeloptischen Systemen.

Bei scannenden und bei stabilisierenden spiegeloptischen Systemen, wie sie beispielsweise bei Wärmebildgeräten und Periskopen auf gepanzerten Fahrzeugen verwendet werden, sind bewegliche Spiegel für schnelle oszillierende Bewegungen erforderlich, die aus dynamischen Gründen ein geringes Gewicht aufweisen sollen. Wegen eines aus Stabilitätsgründen erforderlichen Mindestverhältnisses zwischen der Dicke des Spiegels und seiner Größe gehen die Bestrebungen in der Entwicklung von Leichtbauspiegeln dahin, geeignetes Trägermaterial für Spiegelschichten zu finden, das einerseits ein geringes spezifisches Gewicht aufweist und das andererseits einen genügend großen Elastizitätsmodul hat, um den dynamischen Beanspruchungen Stand zu halten.

In der DE-PS 28 29 999 ist ein beweglicher Spiegel für eine Spiegelreflex-Kamera beschrieben, dessen Spiegelträgermaterial aus glasartiger Kohle besteht, auf das nach Feinbearbeitung ein Spiegelbelag aufgebracht ist. Glasartige Kohle, auch Glaskohle genannt, ist reiner Kohlenstoff mit keramischen Werkstoffeigenschaften, der durch thermischen Abbau eines räumlich vernetzten Kunstharzes hergestellt ist. Er kann unter verschiedenen Markenbezeichnungen von verschiedenen Herstellern bezogen werden, beispielsweise unter dem Namen Sigradur von der Fa. Sigri GmbH. Für einen in der DE-PS 28 29 999 beschriebenen Spiegel kleinen Ausmaßes ist Glaskohle als Trägermaterial gut geeignet. Bewegliche Spiegel in scannenden oder stabilisierenden spiegeloptischen Systemen der eingangs beschriebenen Art sind jedoch so groß dimensioniert, daß der niedrige Elastizitätsmodul der Glaskohle sich negativ auf Belastbarkeit und Haltbarkeit des Spiegels auswirkt.

Der Erfindung liegt deshalb die Aufgabe zugrunde, ein Trägermaterial für bewegliche Spiegel anzugeben, das einen befriedigenden Einsatz in scannenden oder stabilisierenden spiegeloptischen Systemen erlaubt.

Diese Aufgabe wird erfindungsgemäß dadurch gelöst, daß das Spiegelträgermaterial als mindestens dreischichtiges Verbundmaterial aus glasartiger Kohle und faserverstärktem Kunststoff so aufgebaut ist, daß die glasartige Kohle sich an den Außenseiten des Verbundes befindet.

Die Anordnung der Werkstoffe des Spiegelträgers in einer Reihenfolge, daß zwei Schichten Glaskohle eine Schicht des faserverstärkten Kunststoffes einschließen, hat den Vorteil, daß unterschiedliche Wärmeausdehnung der beiden verschiedenen Materialien kompensiert werden kann, so daß bei hohen Temperaturen keine Verbiegung des Trägers als sogenannter Bimetalleffekt auftritt.

Die mit der Erfindung erzielten Vorteile bestehen darüberhinaus darin, daß Glaskohle optisch gut zu bearbeiten ist, daß sie chemisch inert ist und selbst mit stärksten Säuren und Laugen gereinigt werden kann. Außerdem ist Glaskohle ungiftig, läßt sich mit üblichen Klebern verkitten und hat eine gute Haftung für aufgedampfte Metallschichten.

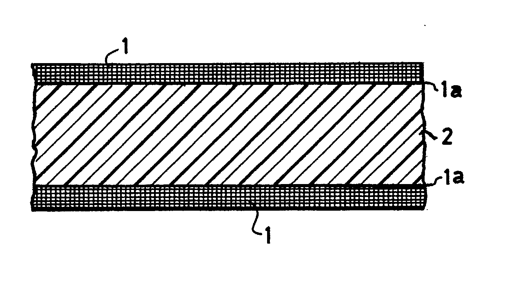

Ein Ausführungsbeispiel ist in der Zeichnung dargestellt und wird im folgenden näher beschrieben. Die einzige Figur zeigt eine schematische Darstellung des als Spiegelträger verwendeten Verbundwerkstoffes. Mit dem Bezugzeichen (1) ist eine Schicht Glaskohlenstoff bezeichnet, der unter dem Markennamen Sigradur von der Fa. Sigri GmbH zu beziehen ist.

Das Bezugzeichen (2) bezeichnet die Mittelschicht des Trägers, die aus karbonfaserverstärktem Kunststoff besteht, welcher unter der Bezeichnung CFK oder CFK-Leichtbauverbundwerkstoff im Handel zu beziehen ist. Die Übergangsschichten (1a) stellen Verklebungen der beiden Werkstoffe dar. Auf eine der Schichten (1) oder auf beide Schichten (1) kann in an sich bekannter Weise eine Spiegelschicht appliziert werden.

Der im Verbund als Mittelschicht (2) verwendete faserverstärkte Kunststoff oder faserverstärkte Leichtbauverbundwerkstoff ist das tragende Substrat des Spiegelträgers, das den größten Teil aller auftretenden und auf den Träger wirkenden Kräfte auffängt. Er soll sich deshalb durch einen hohen E-Modul und eine geringe Dichte auszeichnen. Die als Außenschichten (1) verwendete glasartige Kohle bedeckt als optisch bearbeitbare Schioht die als Trägersubstrat wirkende Mittelschicht (2) und schützt sie vor Feuchtigkeitsaufnahme und einer daraus resultierenden Volumenvergrößerung. Aufgrund ihrer geringen Dichte trägt die Außenschicht (1) wenig zum Gesamtgewicht des Spiegels bei.

Da die Wärmeausdehnung der glasartigen Kohle mit der des CFK gut übereinstimmt, ist ein schichtartig aufgebauter Träger nach dem kennzeichnenden Teil des Patentanspruchs bei wechselnden Temperaturen verzugsfrei und beständig gegen Feuchtigkeit. Die optisch bearbeitete Oberfläche der Glaskohle ist wegen ihrer Härte frei von den Fehlern bekannter Faserverbundspiegeln, die auf einem thermischen Durchdrücken der Faserstruktur auf die Oberfläche beruhen. Güte Maßhaltigkeit und Verarbeitbarkeit der Spiegelträger-Bestandteile erlauben deshalb eine preisgünstige Herstellung von hochwertigen Leichtbauspiegeln.

**Ansprüche**

1. Träger für einen Leichtbauspiegel zum Einsatz in scannenden und in stabilisierenden spiegeloptischen Systemen, dadurch gekennzeichnet, daß das Spiegelträgermaterial als mindestens dreischichtiges Verbundmaterial aus glasartiger Kohle und faserverstärktem Kunststoff so aufgebaut ist, daß die glasartige Kohle sich an den Außenseiten des Verbundes befindet.

2. Träger für einen Leichtbauspiegel nach Anspruch 1, dadurch gekennzeichnet, daß der faserverstärke Kunststoff ein Verbundwerkstoff mit Carbonfasern ist.

3. Träger für einen Leichtbauspiegel nach Anspruch 1, dadurch gekennzeichnet, daß der faserverstärkte Kunststoff als Leichtbauverbundwerkstoff mit Wabenstruktur ausgeführt ist.

4. Träger für einen Leichtbauspiegel nach Anspruch 1, dadurch gekennzeichnet, daß der faserverstärkte Kunststoff als Leichtbauverbundwerkstoff mit Hartschaum ausgeführt ist.